# EUROPÄISCHE PATENTSCHRIFT

(11) **EP 2 038 485 B1**
(45) Veröffentlichungstag und Bekanntmachung des Hinweises auf die Patenterteilung: **30.05.2012**
(21) Anmeldenummer: 06741671.9
(22) Anmeldetag: 27.06.2006
(51) Int. Cl.: E02F 3/36, E02F 9/28, F16B 1/00

(54) **KUPPLUNGSVORRICHTUNG SOWIE ERDBEWEGUNGSMASCHINE MIT EINER SOLCHEN KUPPLUNGSVORRICHTUNG**
COUPLING MECHANISM, AND EARTH MOVING MACHINE COMPRISING SUCH A COUPLING MECHANISM
DISPOSITIF D'ACCOUPLEMENT ET ENGIN DE TERRASSEMENT COMPORTANT UN TEL DISPOSITIF D'ACCOUPLEMENT

(43) Veröffentlichungstag der Anmeldung: 25.03.2009
(60) Teilanmeldung: 11164419.1
(73) Patentinhaber: Oscar Meier AG, 2554 Meinisberg (CH)
(72) Erfinder: BERNHARD, Ernst, CH-2558 Aegerten (CH)
(74) Vertreter: Rentsch Partner AG
(86) Internationale Anmeldenummer: PCT/CH2006/000346
(87) Internationale Veröffentlichungsnummer: WO 2008/000097

(56) Entgegenhaltungen:
- EP-A1- 0 594 486
- WO-A-00/37742
- WO-A-98/34011
- DE-A1-102004 015 471
- DE-U1- 9 314 409

## Beschreibung

### TECHNISCHES GEBIET

Die vorliegende Erfindung bezieht sich auf das Gebiet der Technik von lösbaren Verbindungen zwischen Maschinenteilen, insbesondere von Maschinen und Anbauteilen an Erdbewegungsmaschinen sowie deren Werkzeuge und Anbaugeräte. Die Erfindung betrifft eine Kupplungsvorrichtung gemäss dem Oberbegriff des Anspruchs 1 sowie eine Erdbewegungsmaschine mit einer solchen Kupplung.

### STAND DER TECHNIK

Ausleger und Pendelarme sowie Werkzeuge an Erdbewegungsmaschinen (z.B. Baggern) werden in den meisten Fällen durch zylindrische, hochfeste Bolzen miteinander verbunden. Dies geschieht dadurch, dass das eine Maschinenteil mit einer Gabel ausgebildet ist, und das zweite Maschinenteil mit einem quer angebrachten Rohr ausgerüstet ist, welches eine Länge entsprechend dem Abstand zwischen der Gabel und eine durchgehend zylindrische Bohrung aufweist. Durch diese Bohrung führt ein ebenfalls zylindrischer, hochfester Bolzen. Wird bei Verbindungen dieser Art eine Beweglichkeit verlangt, muss in der Bohrung, in welcher sich der Bolzen bewegt, eine geeignete Lagerbüchse eingebaut werden.

Schnellwechselvorrichtungen dieser Art zum schnellen Auswechseln verschiedener Werkzeuge an Erdbewegungsmaschinen sind beispielsweise aus den Druckschriften DE-A1-102 00 836, DE-A1-44 12 373, DE-C2-44 08 386, DEB3-103 35 667, DE-U1-202 12 540, DE-U1-297 08 672 oder DE-A1-10 2004 015 471 bekannt.

Bei Verbindungen, bei welchen keine Beweglichkeit verlangt ist, entfällt die Lagerbüchse. Vielmehr würde hier eine Bohrung in höherfestem Material benötigt, um bei hohen dynamischen Belastungen nicht ausgeschlagen zu werden. Ein Problem besteht darin, dass es sich bei dieser Art des Maschinenbaus fast ausschliesslich um Schweisskonstruktionen handelt. Bedingt durch diese relativ grobe Fertigung, den Verzug und die erschwerte Bearbeitung ergeben sich zwangsläufig Spielverhältnisse, welche sich bereits bei Neumaschinen nachteilig auswirken.

Es existieren im Stand der Technik auch Systeme mit Spreizbolzen. Dabei wird ein konischer Bolzen in eine geschlitzte Büchse gespannt, welche innen ebenfalls konisch ist. Dadurch wird es möglich, den Bolzen spielfrei in der jeweils kleineren Bohrung einzuspannen. Die grössere Bohrung, welche auf der gleichen geschlitzten Büchse gehalten werden soll, behält dagegen das vorhandene Spiel. Expandierende oder Spreizbolzen sind bei der Montage jedoch mit Aufwand verbunden und setzen richtige Handhabung voraus.

Aus der Druckschrift WO-A1-00/37742 ist eine Kupplung zwischen dem Ausleger eines Krans und einer Palettengabel bekannt, bei der ein erstes Kupplungsteil auf der einen Seite in ein zweites Kupplungsteil eingehakt und anschliessend auf der anderen Seite durch lateral verschiebbare Verriegelungsbolzen, die in entsprechende Öffnungen einfahren, verriegelt wird. Eine insbesondere auf schräg stehenden Spannflächen basierende Spannvorrichtung ist nicht offenbart.

Aus der Druckschrift WO-A1-98134011 ist eine Spannvorrichtung für ein Werkzeug in einem Werkzeughalter offenbart. Spannelemente sind dort zwei spiegelsymmetrische Elemente, die jeweils aus zwei schräg zueinander angeordneten Zylinderabschnitten bestehen. Eine durchgehende Führung der Spannelemente ist dabei nicht möglich.

Des Weiteren bestehen Versuche, spielfreie Verbindungen zu erzielen, indem ein konischer Bolzen in konischen Bohrungen der zu verbindenden Teile gespannt wird. Das Problem ist dasselbe wie oben, wo das Verbindungselement in der einen Bohrung spielfrei ist, in der anderen Bohrung jedoch durch herstellungsbedingte Toleranzen von Anfang an Spiel hat.

### DARSTELLUNG DER ERFINDUNG

Es ist Aufgabe der Erfindung, eine insbesondere für Schnellwechselvorrichtungen an Erdbewegungsmaschinen geeignete Kupplungsvorrichtung zu schaffen, welche die Nachteile bekannter Vorrichtungen vermeidet und sich insbesondere durch einfachen Aufbau und einfache Herstellbarkeit, schnelle Betätigung, Spielfreiheit und die Übertragung grosser Kräfte auszeichnet, sowie eine Erdbewegungsmaschine mit den entsprechenden Vorteilen anzugeben.

Die Aufgabe wird durch die Gesamtheit der Merkmale der Ansprüche 1 und 9 gelöst. Der Kern der Erfindung besteht in einem Spannmechanismus, der auf einfache Weise durch zwei mit ihren Achsen gegeneinander verkippte zylindrische Bohrungen in den beiden Kupplungsteilen, die beim ineinangreifenden Zusammenfügen der Kupplungsteile gemeinsam eine durchgehende Öffnung bilden, in die ein speziell an die beiden Bohrungen angepasster Spannbolzen eingeführt wird und das eine Kupplungsteil dadurch gegen das andere Kupplungsteil in einer zur Bolzenachse senkrechten Spannrichtung bewegt. Der Spannbolzen weist dabei eine an die eine Bohrung angepasste zylindrische Form auf und ist zu einem Ende hin an einer Seite durch eine Spannfläche in Form eines gekippten Zylindermantelsegments begrenzt, die bezüglich Radius und Kippwinkel an die andere Bohrung angepasst ist.

Eine erste Ausgestaltung der Erfindung ist dadurch gekennzeichnet, dass die Spannachse im wesentlichen senkrecht zur Spannrichtung orientiert ist, und dass die Radien der ersten und zweiten Bohrung im wesentlichen gleich gross sind und den Radien des Spannbolzens und der Spannfläche entsprechen. Insbesondere liegt der Kippwinkel zwischen 1° und 20°, vorzugsweise zwischen 1° und 10°.

Vorzugsweise ist eines der beiden Kupplungsteile gabelförmig ausgebildet, während das andere der beiden Kupplungsteile in die Gabel eingreift.

Eine andere Ausgestaltung der Erfindung zeichnet sich dadurch aus, dass mehrere Spannbolzen mit zugeordneten ersten und zweiten Bohrungen vorgesehen sind, und dass die Spannbolzen mit ihren zugeordneten ersten und zweiten Bohrungen paarweise in einer gemeinsamen Achse angeordnet sind.

Die mechanischen Eigenschaften der Kupplungsvorrichtung lassen sich weiter verbessern, wenn gemäss einer weiteren Ausgestaltung die beiden Kupplungsteile nach Art einer Fleyerkette mit einer Mehrzahl von alternierend angeordneten Laschen ineinandergreifen, welche sich in der Spannrichtung erstrecken.

Insbesondere können zur Vereinfachung und Automatisierung des Kupplungsvorgangs die Spannbolzen hydraulisch betätigbar sein.

Insbesondere im Zusammenhang mit dem Werkzeug-Schnellwechsel an einer Erdbewegungsmaschine ist es von Vorteil, wenn an einem der Kupplungsteile quer zur Spannrichtung stehende Bolzen angeordnet sind, hinter welche das andere der Kupplungsteile beim Verbinden der Kupplungsteile mit entsprechenden Haken greift.

Eine bevorzugte Ausgestaltung der erfindungsgemässen Erdbewegungsmaschine ist dadurch gekennzeichnet, dass die Erdbewegungsmaschine eine Schnellwechselvorrichtung zum schnellen Wechseln von an der Erdbewegungsmaschine anbringbaren Werkzeugen aufweist, und dass die Kupplungsvorrichtung Teil der Schnellwechselvorrichtung ist.

Eine andere Ausgestaltung zeichnet sich dadurch aus, dass die Erdbewegungsmaschine ein Bagger mit einem Ausleger ist, und dass die Kupplungsvorrichtung an Verbindungsstellen des Auslegers vorgesehen ist, wobei insbesondere mittels der Kupplungsvorrichtung in den Verbindungsstellen eine Verlängerung in den Ausleger einsetzbar ist oder ein Zwischenstück zum Strecken des Auslegers in den Ausleger einsetzbar ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein erstes Ausführungsbeispiel einer Kupplungsvorrichtung nach der Erfindung im ungespannten Zustand;
- Fig. 2: die Kupplungsvorrichtung aus Fig. 1 mit eingeschobenen Spannbolzen im gespannten Zustand;
- Fig. 3: in zwei Teilfiguren einen Bagger mit einem Ausleger ohne (Fig. 3a) und mit (Fig. 3b) Verlängerung sowie einem Schnellwechsler für das Werkzeug, wobei an den Verbindungsstellen und im Schnellwechsler Kupplungsvorrichtungen nach der Erfindung zum Einsatz kommen;
- Fig. 4: ein zweites Ausführungsbeispiel einer Kupplungsvorrichtung nach der Erfindung, wie es beispielsweise in einem Schnellwechsler einsetzbar ist;
- Fig. 5: in mehreren Teilfiguren ein drittes Ausführungsbeispiel einer Kupplungsvorrichtung nach der Erfindung mit zwei Bolzen zur Abstützung, wie es in einem Schnellwechsler einsetzbar ist, wobei in Teilfiguren 5b und 5c die Rollen der Bohrungen in den Kupplungsteilen vertauscht sind;
- Fig. 6: in zwei verschiedenen Ansichten (Fig. 6a und 6b) ein viertes Ausführungsbeispiel einer Kupplungsvorrichtung nach der Erfindung, die insbesondere für einen Bagger geeignet ist;
- Fig. 7: in zwei verschiedenen Ansichten (Fig. 7a und 7b) ein weiteres Ausführungsbeispiel einer Kupplungsvorrichtung nach der Erfindung zum Befestigen einer Verlängerung im Ausleger eines Baggers gemäss Fig. 3;
- Fig. 8: in verschiedenen Ansichten (Fig. 8a-8d) der Einsatz der Kupplungsvorrichtung aus Fig. 7 zur schnellen Montage eines Zwischenstücks am Ausleger eines Baggers;
- Fig. 9: ein Ausführungsbeispiel einer Kupplungsvorrichtung nach der Erfindung in einer Schnellwechselvorrichtung zum schnellen Auswechseln der Werkzeuge (z.B. Schaufeln) an einem Bagger; und
- Fig. 10: ein weiteres Ausführungsbeispiel einer Kupplungsvorrichtung nach der Erfindung mit mehrfach ineinander verschachtelten Laschen.

### WEGE ZUR AUSFÜHRUNG DER ERFINDUNG

Es war unter anderem Aufgabe der vorliegenden Entwicklung, Komponenten zu finden, welche beim Zusammenbau einer Maschine relativ grosszügig tolerierte Teile formschlüssig miteinander verbinden können. Es sollte ebenfalls möglich sein, Schnellwechselsysteme zu bauen, welche mit geringerem Aufwand und Gewicht den stetig steigenden Anforderungen gerecht werden. Ein äusserst wichtiger Punkt war auch, dass ein auftretendes Spiel stets automatisch, selektiv aufgehoben wird. Dies garantiert die sichere, spielfreie Befestigung von Werkzeugen und Maschinenteilen, welche bereits Gebrauchsspuren und Abnutzungserscheinungen haben, oder welche von anderen Gegenstücken gehalten wurden.

Häufig verwendete Konstruktionen mit Haken, welche sich unter Last aufweiten, sollten dabei nicht zu den Konstruktionsmerkmalen gehören. Verbindungen mit Spiel wären eine zusätzliche Belastung für Lagerungen und Teile des Hubwerkes von Baumaschinen und sollten deshalb vermieden werden.

Wesentlicher Ansatz der Lösung ist es nun, dass entgegengesetzte Kräfte auf möglichst kurzen Distanzen aufgefangen werden können. Dabei sollen auch grosse Toleranzen keine negativen Auswirkungen haben. Dies geschieht durch die besondere Anordnung von einfachen, runden Bohrungen, welche in einem bestimmten Winkel zueinander verlaufen.

Werden die zwei zu verbindenden Maschinenteile ineinander geführt, entsteht eine Art konische Öffnung aus zylindrischen Mantelsegmenten. Die Besonderheit besteht darin, dass durch eine erste, zylindrische Bohrung im einen der zu verbindenden Maschinenteile mit über die ganze Länge der Öffnung gleichem Radius, entsprechend dem Bohrungsdurchmesser, die erste der Spannflächen entsteht, und dass mit einer zweiten zylindrischen Bohrung im anderen Maschinenteil, welche im Vergleich zur Bohrung im ersten Teil in der Achse gekippt ist, die zweite Spannfläche entsteht. Durch Einführen eines entsprechend geformten Spannbolzens, der sich an den beiden Spannflächen der Bohrungen abstützt, können dann die beiden Maschinenteile gegeneinander verspannt werden.

Auf diese Weise ist es möglich, auf einfache Art, mit richtig angeordneten, zylindrischen Bohrungen eine Art konische Öffnung zu erhalten. Dabei ist es für die Bearbeitung unwesentlich, ob bei der Montage der quasi-konische Spannbolzen von aussen nach innen oder umgekehrt in die Bohrung gespannt werden soll. Bei einer anderen Anordnung ist es möglich, die Spannbolzen von innen, direkt oder indirekt durch hydraulische Zylinder zu betätigen. (Die Bearbeitung einer herkömmlichen konischen Bohrung kann aus praktischen Gründen nur von aussen erfolgen, womit sich zwangsläufig ergibt, dass der Bolzen nur von aussen montiert werden kann).

In diese Öffnung wird der quasi-konische Spannbolzen eingeführt, welcher die Aussenform von zwei schräg zueinander verlaufenden Zylindermantelsegmenten hat, der "Zylindermantelsegmentkonus". Die Besonderheit besteht darin, dass auf jeder der beiden Längsseiten des sich verjüngenden Bolzenabschnitts (Quasi-Konus) über die ganze Länge der gleiche Radius die Oberfläche bildet. Durch den gleich bleibenden Radius aller sich berührenden Teile auf der ganzen Länge entsteht eine äusserst gute Tragfähigkeit, welche auch dann erhalten bleibt, wenn der Spannbolzen zwecks Nachspannung weiter in die Bohrungen hineingetrieben wird.

Die Kupplungsteile müssen aus hochfestem Stahl gefertigt werden, welcher nicht mehr für alle Bearbeitungsmethoden gut geeignet ist. Daher ist es ein grosser Vorteil, dass sich die Bearbeitung auf einfache, runde Bohrungen beschränkt, welche sich auch noch äusserst einfach messen lassen.

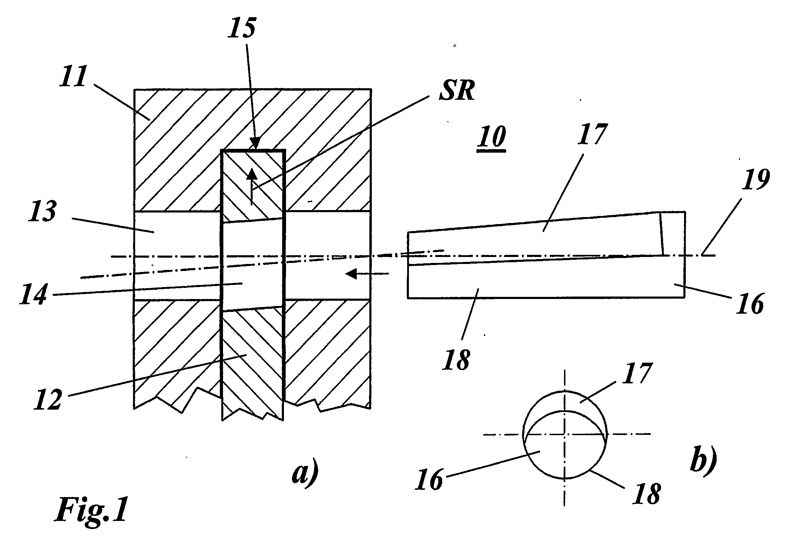

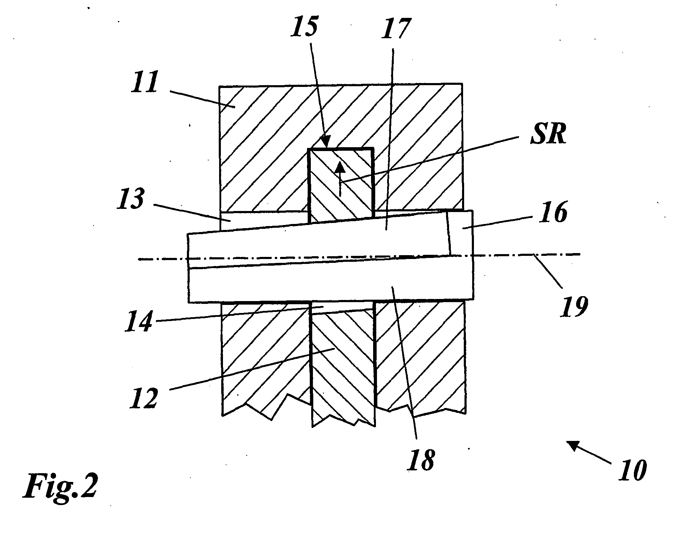

In Fig. 1 ist ein erstes, einfaches Ausführungsbeispiel einer Kupplungsvorrichtung nach der Erfindung im ungespannten Zustand wiedergegeben, wobei die Teilfigur 1a den Längsschnitt durch die ineinandergreifenden Kupplungsteile zeigt, und Teilfigur 1 b die Sicht von vom auf den Spannbolzen in Richtung der Bolzenachse wiedergibt. Fig. 2 zeigt die Kupplungsvorrichtung aus Fig. 1 im gespannten Zustand.

Die Kupplungsvorrichtung 10 der Fig. 1 und 2 umfasst zwei Kupplungsteile 11 und 12, die in einer Spannrichtung SR ineinandergreifen. Im vorliegenden Beispiel ist das zweite Kupplungsteil 12 in Spannrichtung SR in eine entsprechende Aussparung im ersten Kupplungsteil 11 eingeführt und liegt an einen Anschlag 15 an. Das erste Kupplungsteil 11 ist im Überlappungsbereich der beiden Kupplungsteile 11, 12 quer zur Spannrichtung SR von einer ersten zylindrischen Bohrung 13 durchsetzt, die konzentrisch zu einer Spannachse 19 verläuft. Das zweite Kupplungsteil 12 weist eine zweite zylindrische Bohrung 14 auf, deren Radius im wesentlichen gleich dem Radius der ersten Bohrung 13 ist, deren Achse jedoch gegenüber der Achse der ersten Bohrung 13 bzw. der Spannachse 19 um einen spitzen Winkel verkippt ist. Beide Bohrungen 13, 14 sind zueinander so angeordnet, dass die zweite Bohrung 14 mit einem Teil der Innenwand in die erste Bohrung 13 hineinragt und aufgrund ihrer Verkippung als Spannfläche zum gegenseitigen Spannen der beiden Kupplungsteile 11, 12 eingesetzt werden kann.

Zum Spannen wird ein Spannbolzen 16 eingesetzt, der von einer kreiszylindrischen Grundform ausgeht, wobei die Zylinderachse parallel zur Spannachse 19 orientiert ist. In Fig. 1a ist am Spannbolzen 16 zum linken Ende hin eine "schräge" Spannfläche 17 ausgebildet, welche die Form eines gekippten Zylindermantelsegments mit einem konstanten Radius aufweist, der dem Radius der zweiten Bohrung 14 entspricht, und dessen Kippwinkel gleich dem Verkippungswinkel zwischen den beiden Bohrungen 13, 14 ist. Der Spannfläche 17 gegenüber liegt als Führungsfläche 18 ein gerades Zylindermantelsegment des ursprünglichen Spannbolzen-Zylinders.

Wird nun der Spannbolzen 16 gemäss Fig. 2 in die von den beiden Bohrungen 13, 14 gebildete Durchgangsöffnung eingeführt, liegt er ab einer bestimmten Eintauchtiefe auf der einen Seite mit der Führungsfläche 18 an der Innenwand der ersten Bohrung 13 an, während er mit der Spannfläche 17 an der gegenüberliegenden Innenwand der zweiten Bohrung 14 anstösst. Da die zweite Bohrung 14 und die Spannfläche 17 in Radius und Kippwinkel gleich sind, ergibt sich ein grossflächiger Kontakt zwischen Spannbolzen 16 und zweitem Kupplungsteil 12, über den sicher relativ hohe Spannkräfte übertragen werden können. Der Kippwinkel hängt unter anderem vom Weg ab, den der Spannbolzen 16 zurücklegen kann. Er liegt zweckmässigerweise zwischen 1° und 20°, vorzugsweise zwischen 1° und 10°.

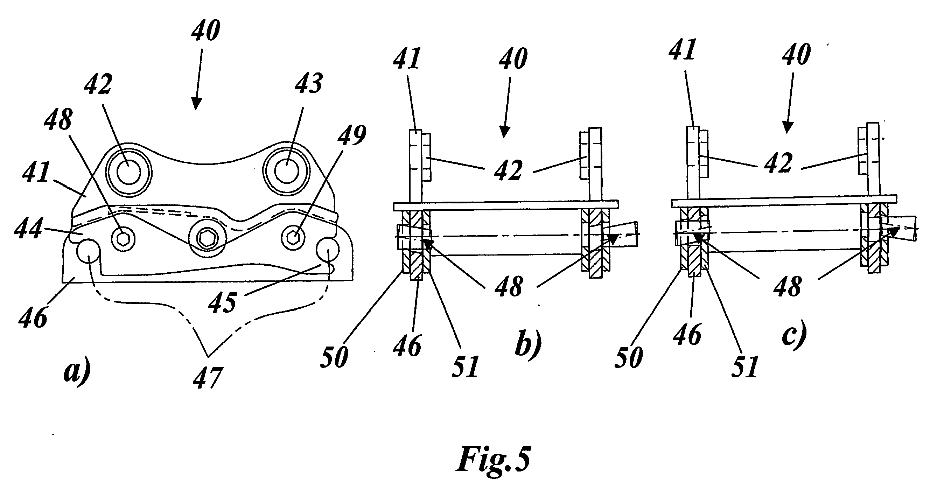

Es ist unmittelbar einsichtig, dass die erste und zweite Bohrung 13 bzw. 14 ihre Positionen auch vertauschen können, d.h., dass die gerade Bohrung im zweiten Kupplungsteil 12 und die verkippte Bohrung im ersten Kupplungsteil 11 angeordnet sind (siehe dazu die Fig. 5b und 5c).

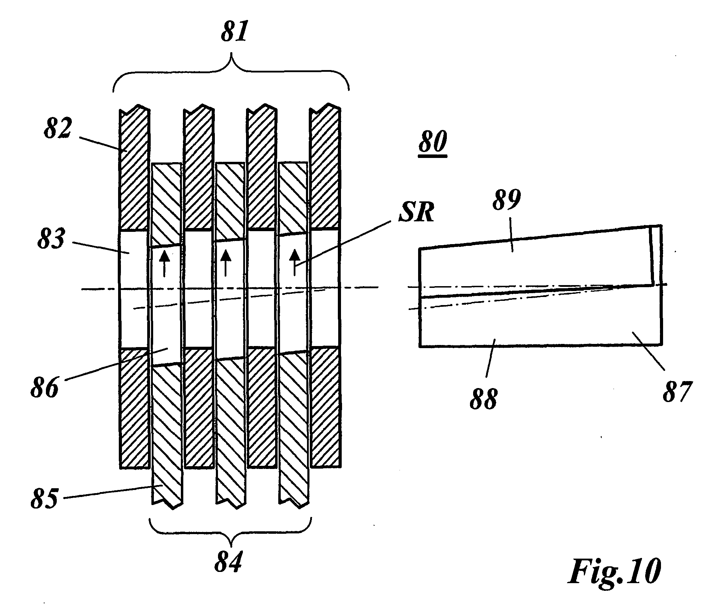

Des weiteren ist es möglich, bei einer Kupplungsvorrichtung 80 gemäss Fig. 10 die beiden Kupplungsteile 81 und 84 mit ihren Bohrungen 83 und 86 nach Art einer Fleyerkette mit einer Mehrzahl von alternierend angeordneten Laschen 82, 85 ineinandergreifen zu lassen, welche sich in der Spannrichtung SR erstrecken, um so die beim Spannen auftretenden Scherkräfte am Spannbolzen 87 besser über die Spannfläche 89 und Führungsfläche 88 zu verteilen.

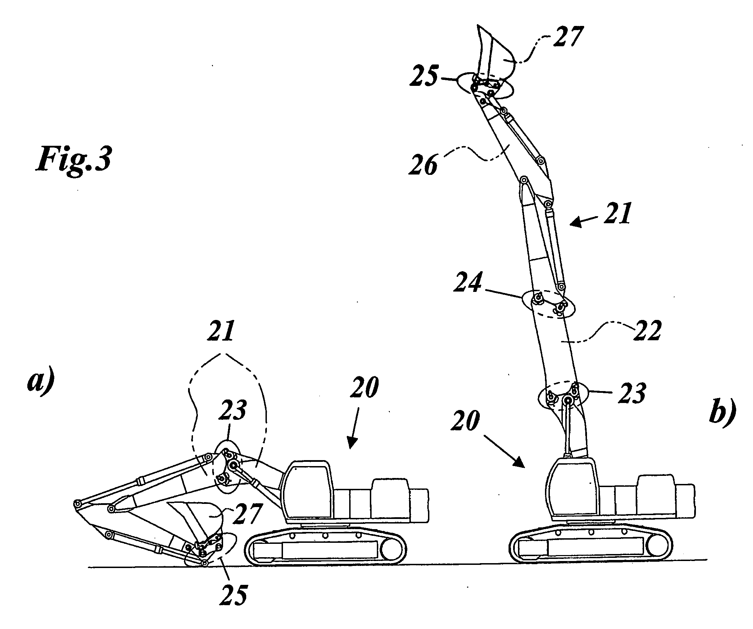

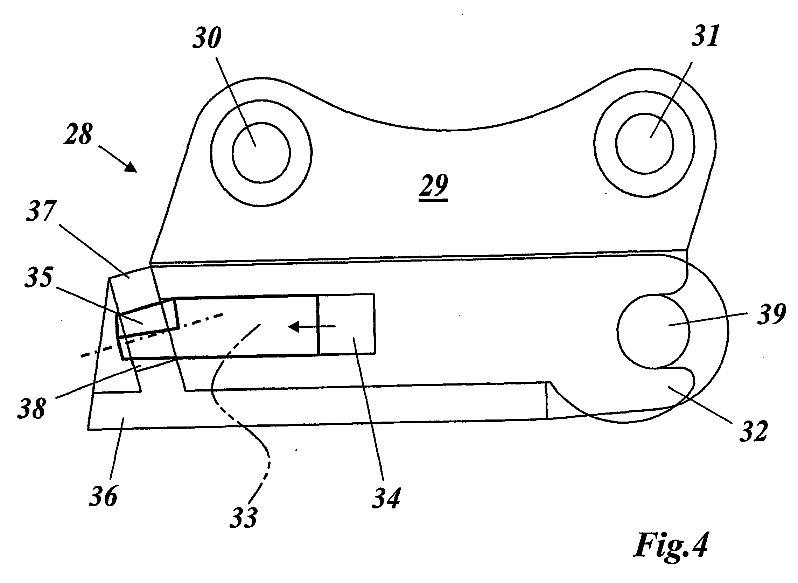

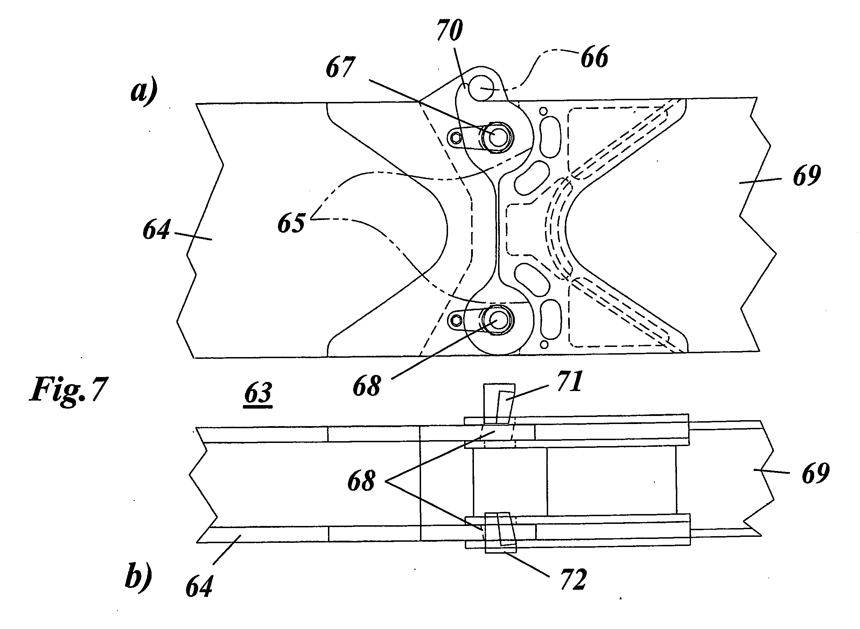

Hauptanwendungsbereich der beschriebenen Kupplungsvorrichtungen sind vor allem Erdbewegungsmaschinen mit veränderbaren Auslegern und/oder auswechselbaren Werkzeugen, z.B. Schaufeln. Fig. 3 zeigt einen Bagger 20 mit einem Ausleger 21, der in Fig. 3a eingeschwenkt und in Fig. 3b ausgestreckt und zusätzlich mit einer Verlängerung 22 ausgestattet dargestellt ist. An den Verbindungsstellen 23, 24 des Auslegers 21 sind Kupplungsvorrichtungen gemäss der vorliegenden Erfindung angeordnet, die in Fig. 7 im Detail wiedergegeben sind. Eine weitere Kupplungsvorrichtung dieser Art ist innerhalb einer Schnellwechselvorrichtung 25 am Ende des Auslegers 21 vorgesehen, um Werkzeuge 27 für den Bagger 20, z.B. in Form einer Schaufel, leicht und schnell auswechseln zu können. Eine entsprechende Kupplungsvorrichtung ist beispielsweise in Fig. 4, 5 und 9 dargestellt.

Fig. 4 zeigt eine Kupplungsvorrichtung 28 nach der Erfindung mit einem oberen Kupplungsteil 29 und einem unteren Kupplungsteil 36. Am oberen Kupplungsteil 29 sind voneinander beabstandet zwei Augen 30 und 31 vorgesehen, mittels derer die Vorrichtung am Ausleger eines Baggers oder dergleichen befestigt werden kann. An der Unterseite des oberen Kupplungsteils 29 ist rechts ein Haken 32 ausgebildet, mit dem das obere Kupplungsteil 29 beim Einkuppeln hinter einem am unteren Kupplungsteil 36 angebrachten Bolzen 39 um den Bolzen 39 verschwenkbar eingehakt werden kann. Des weiteren ist im oberen Kupplungsteil 29 in einer horizontal verlaufenden ersten Bohrung 34 ein Spannbolzen 33 geführt, der am linken Ende die bereits beschriebene, gekippte Spannfläche 35 aufweist, mit der er an der Innenwand einer zweiten Bohrung 38 anliegt, die verkippt in einem schräg stehenden Wandstück 37 am unteren Kupplungsteil 36 angeordnet ist. Da der Spannbolzen 33 hier gegenüber dem Beispiel der Fig. 1 nur auf einer Seite in der ersten Bohrung geführt ist, wird in diesem Fall eine gute Führung des verlängerten quasi-konischen Spannbolzens 33 vorausgesetzt. Bei dieser Art von Verriegelung treten am Spannbolzen grössere Biegemomente auf. Andererseits ist der Aufbau der Kupplungsvorrichtung 28 besonders einfach und störungssicher.

Fig. 5 zeigt ein Ausführungsbeispiel der Erfindung mit einer Kupplungsvorrichtung 40, bei der sich das obere Kupplungsteil 41, das wiederum zwei Augen 42, 43 zur Befestigung aufweist, auf zwei Bolzen 47 am unteren Kupplungsteil 46 abstützt, die neben der Abstützung und im Zusammenwirken mit dem am oberen Kupplungsteil 41 ausgebildeten Anschlag 44 und Haken 45 auch noch als Montagehilfe dienen. Die Verriegelung erfolgt durch die Spannbolzen 48 und 49. Bei dieser Bauweise werden die Kupplungsteile 41, 46 in verschiedenen Baugrössen, der Maschinengrösse angepasst, angeboten. Die Aufhängung (oberes Kupplungsteil 41) wird entsprechend dem Maschinentyp angefertigt. Dadurch können Werkzeuge unter Maschinen verschiedener Hersteller, aber gleicher Grösse des Schnellwechslers, ausgetauscht werden. Die Werkzeuge können hier längs als auch quer ausgetauscht werden. Weiter ist es möglich, das Werkzeug auf Umschlag zu montieren, weil beide Schnellwechsierteile (Kupplungsteile 41, 46) symmetrisch sind.

Wie aus den Teilfiguren 5b und 5c zu entnehmen ist, liegt das untere Kupplungsteil 46 zwischen zwei Ohren 50, 51 am oberen Kupplungsteil 41. Die Darstellung zeigt zwei Varianten für die Anordnung der Bohrungen: In einer bevorzugten Ausführung (Fig. 5b) ist die verkippte Bohrung im einzelnen, mittleren Ohr des unteren Kupplungsteils 46 untergebracht. Bei einer alternativen Ausführung (Fig. 5c), ist demgegenüber die verkippte Bohrung in den beiden äusseren Ohren 50, 51 angeordnet. Es werden in beiden Figuren jeweils ein eingerückter und ein ausgerückter quasi-konischer Spannbolzen 48 gezeigt.

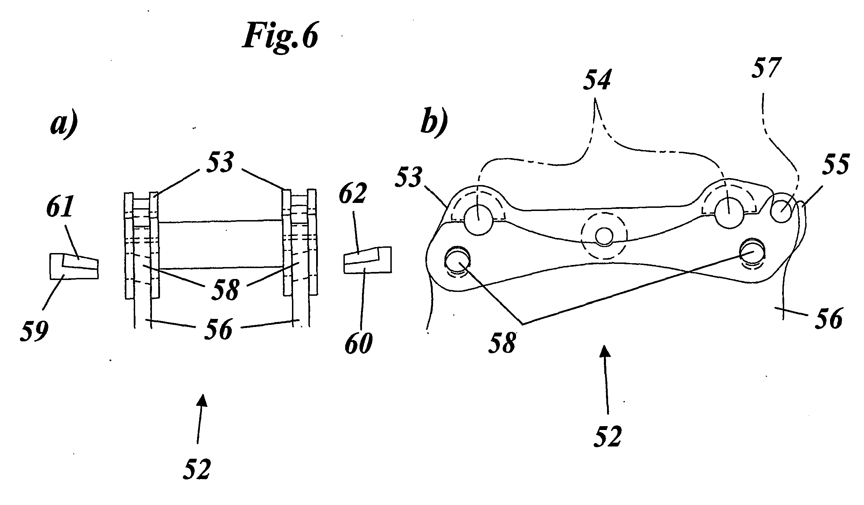

Fig. 6 zeigt als weiteres Ausführungsbeispiel der Erfindung eine Kupplungsvorrichtung 52 mit einem oberen Kupplungsteil 53 und einem unteren Kupplungsteil 56, bei dem sich das (zur Maschine gehörende) obere Kupplungsteil 53 mit zwei Bolzen 54 auf dem Ohr des (zum Werkzeug gehörenden) unteren Kupplungsteils 56 abstützt und zentriert, wo sich die verkippten (schrägen) Bohrungen 58 befinden. Ein weiterer kleiner Bolzen 57 am unteren Kupplungsteil 56 und ein Haken 55 am oberen Kupplungsteile 53 werden ausschliesslich als Montagehilfe benutzt. Das Spannen erfolgt wiederum durch Spannbolzen 59, 60 mit schräg liegenden Spannflächen 61, 62. Bei dieser Bauweise werden schon die maschinenseitigen Bolzen 54 spielfrei geklemmt. Dadurch wird an der nächstmöglichen Stelle zur Maschine ein schädliches Spiel, welches während des Betriebes noch grösser wird, aufgehoben und unschädlich gemacht.

Fig. 7 zeigt ein Ausführungsbeispiel der Erfindung mit einer Kupplungsvorrichtung 63, die an einer Verbindungsstelle eines Auslegers angeordnet ist. Die Kupplungsteile 64, 69 sind zugleich Teile des Auslegers. Die Abstützung erfolgt hier an den Aussenringen 65 der Augen, in welchen sich jeweils eine schräge Bohrung 67, 68 befindet. Zum Spannen werden in bereits mehrfach beschriebener Weise die Spannbolzen 71, 72 eingesetzt. Ein kleiner Bolzen 66 und ein Haken 70 am Gegenstück werden ausschliesslich als Montagehilfe benutzt.

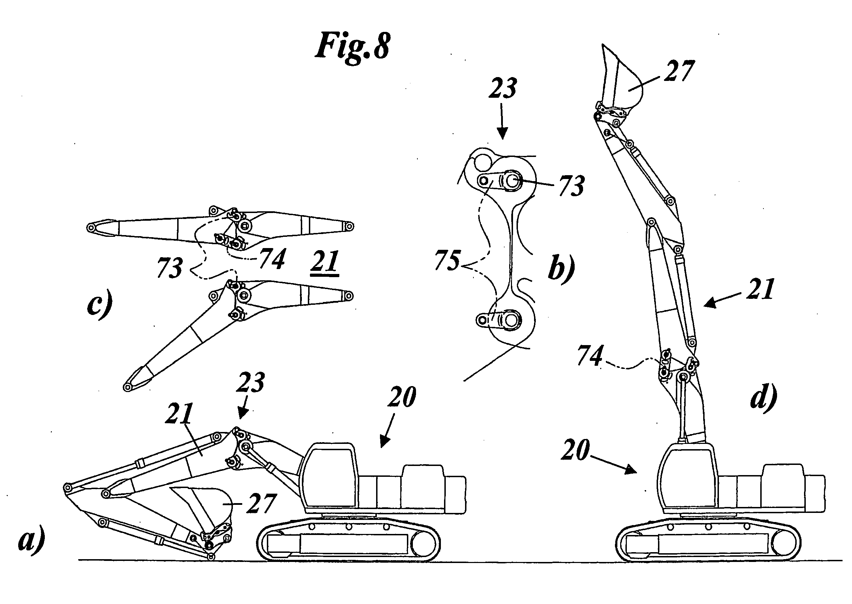

Fig. 8 zeigt die Darstellung eines Baggers 20 mit Ausleger 21 und Werkzeug 27 mit einer Kupplungsvorrichtung der beschriebenen Art in einer Verbindungsstelle 23 des Auslegers 21 (Fig. 8a, b), welche im gelösten Zustand in verschiedene Positionen gebracht werden kann. Bei dieser Anordnung werden die zu verbindenden Teile um die eine Verbindungsachse 73 geschwenkt. So wird der Ausleger 21 durch den gestreckten Zustand beispielsweise optimal eingestellt für Abbrucharbeiten. Ein Zwischenstück 74 überbrückt die Distanz zwischen den beiden Teilen. Hierbei werden die quasi-konischen Spannbolzen mit Mitteln 75 zur verdrehsicheren Befestigung mechanisch vorgespannt mit dem Kupplungsteil mit den schrägen Bohrungen verbunden. Dadurch wird erreicht, dass die Trag- und Passverhältnisse trotz verdrehter Stellung ideal erhalten bleiben. Werden nach Einbau des Zwischenstückes 74 alle quasi-konischen Spannbolzen in ihre Bohrungen gespannt, erhält die Verbindung trotz mehrerer Einzelteile eine äusserst grosse Steifigkeit ohne geringstes Spiel.

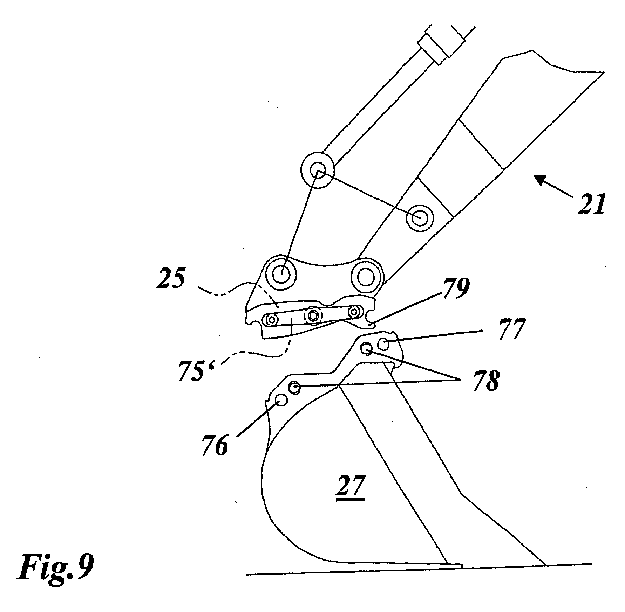

In Fig. 9 ist der Aufbau einer hydraulischen Schnellwechselvorrichtung 25 an einem Ausleger 21 wiedergegeben, die fernbedient ist. Bei diesem bevorzugten Ausführungsbeispiel der Erfindung werden zum Auswechseln des Werkzeuges 27 die vier quasi-konischen Spannbolzen hydraulisch nach aussen aus den Bohrungen 78 gerückt. Dies ist von aussen deutlich ersichtlich dadurch, dass eine hydraulisch vorspannbare Sicherung 75' nach aussen vorsteht. Dadurch ist es für den Maschinenführer jederzeit ersichtlich, dass die Verriegelung offen ist. Am Werkzeug sind Bolzen 76, 77 vorgesehen, die zum Einhaken eines Hakens 79 und als Anschlag dienen. Sonst verwendete Hebel und zeigerähnliche Federn entfallen bei dieser Ausführung. Bei einer einfacheren Ausführung werden die quasi-konischen Spannbolzen durch manuelle Betätigung mechanisch nach aussen gerückt. Die weiteren Merkmale bleiben erhalten.

Insgesamt ergeben sich mit der Erfindung folgende Merkmale und Vorteile:
- Schnellkupplung für Maschinenteile, welche absolut spielfreie, hochbelastbare Verbindungen zulässt.
- Flexibles Verbindungssystem, welches eine Vielzahl von Anordnungen und Anwendungen zulässt.
- Verbindungssystem, welches unter Anwendung grosser Fabrikationstoleranzen spielfreie Verbindungen zulässt und dadurch Kosten infolge hochgenauer Bearbeitungen spart.
- Verbindungssystem, welches die Montage wesentlich dadurch erleichtert, dass zwei kurze, leichte, quasi-konische Spezialbolzen als Spannbolzen verwendet werden.
- Verbindungssystem, welches die Montage wesentlich dadurch erleichtert, dass auf der gleichen Achse zwei quasi-konische Spannbolzen verwendet werden, welche selbst bei Fluchtungsfehlern der Bohrungen eine leichte Montage zulassen.
- Verbindungssystem, welches sich eignet für hydraulisch fembediente Betätigung.
- Verbindungssystem, welches auftretendes Spiel durch Vorspannung der quasi-konischen Spannbolzen von vornherein automatisch eliminiert.
- Verbindungssystem, welches aufgrund des Aufbaus den quasi-konischen Spannbolzen an zwei verschiedenen Stellen auf Scherung beansprucht, womit ein grosses Biegemoment vermieden wird.
- Verbindungssystem, bei welchem durch die gezielte Wahl von Achsrichtungen und einfach bearbeitbaren runden Bohrungen quasi-konische Durchgangsöffnungen entstehen.

### BEZUGSZEICHENLISTE

- 10,28,40,52,63,80: Kupplungsvorrichtung
- 11,12: Kupplungsteil
- 13,14: Bohrung (Spannbolzen)
- 15: Anschlag
- 16,33: Spannbolzen
- 17,35: Spannfläche (gekipptes Zylindermantelsegment)
- 18: Führungsfläche (gerades Zylindermantelsegment)
- 19: Spannachse
- 20: Bagger
- 21: Ausleger
- 22: Verlängerung
- 23,24: Verbindungsstelle
- 25: Schnellwechselvorrichtung
- 26: Pendelarm
- 27: Werkzeug (Schaufel)
- 29,36: Kupplungsteil
- 30,31: Auge
- 32: Haken
- 34,38: Bohrung (Spannbolzen)
- 37: Wandstück
- 39: Bolzen
- 41,46: Kupplungsteil
- 42,43: Auge
- 44: Anschlag
- 45: Haken
- 47: Bolzen
- 48,49: Spannbolzen
- 50,51: Ohr
- 53,56: Kupplungsteil
- 54,57: Bolzen
- 55: Haken
- 58: Bohrung
- 59,60: Spannbolzen
- 61,62: Spannfläche
- 64,69: Kupplungsteil
- 65: Aussenring (Auge)
- 66: Bolzen
- 67,68: Bohrung
- 70: Haken
- 71,72: Spannbolzen
- 73: Verbindungsachse (Schwenkachse)
- 74: Zwischenstück
- 75: Verdrehsicherung
- 75': Sicherung
- 76,77: Bolzen
- 78: Bohrung
- 79: Haken
- 81,84: Kupplungsteil
- 82,85: Lasche
- 83,86: Bohrung
- 87: Spannbolzen
- 88: Führungsfläche
- 89: Spannfläche
- SR: Spannrichtung

## Patentansprüche

1. Kupplungsvorrichtung (10, 28, 40, 52, 63, 80) zum spielfreien, lösbaren Verbinden zweier Kupplungsteile (11, 12; 29, 36; 41, 46; 53, 56; 64, 69; 81, 84), welche insbesondere an Maschinenundloder Anbauteilen von Erdbewegungsmaschinen sowie deren Werkzeugen und/oder Anbaugeräten angeordnet sind, wobei die beiden Kupplungsteile (11, 12; 29, 36; 41, 46; 53, 56; 64, 69; 81, 84) zum Zwecke der Kupplung in einer Spannrichtung (SR) mit Anschlag ineinandergreifend ausgebildet sind, in einem der beiden Kupplungsteile (11, 12; 29, 36; 41, 46; 53, 56; 64, 69; 81, 84) eine zu einer Spannachse (19) konzentrische erste Bohrung (13, 34, 83) zur Führung eines Spannbolzens (16; 33; 48, 49; 59, 60; 71, 72; 87) angeordnet ist, in dem anderen der beiden Kupplungsteile (11, 12; 29, 36; 41, 46; 53, 56; 64, 69; 81, 84) eine zweite Bohrung (14; 38; 86) angeordnet ist, deren Achse gegenüber der Spannachse (19) um einen Kippwinkel gekippt ist, und die zusammen mit der ersten Bohrung (13, 34, 83) im gekuppelten Zustand eine durchgehende Öffnung zur Aufnahme des Spannbolzens (16; 33; 48, 49; 59, 60, 71, 72; 87) bildet, **dadurch gekennzeichnet, dass** der Spannbolzen (16; 33; 48, 49; 59, 60; 71, 72; 87) eine an die erste Bohrung (13, 34, 83) angepasste zylindrische Form aufweist und zu einem Ende hin an einer Seite durch eine Spannfläche (17; 35; 61, 62; 89) in Form eines gekippten Zylindermantelsegments begrenzt ist, die bezüglich Radius und Kippwinkel an die zweite Bohrung (14; 38; 86) angepasst ist.

2. Kupplungsvorrichtung nach Anspruch 1, **dadurch gekennzeichnet, dass** die Spannachse (19) im wesentlichen senkrecht zur Spannrichtung (SR) orientiert ist, und dass die Radien der ersten und zweiten Bohrung (13, 34, 83 bzw. 14; 38; 86) im wesentlichen gleich gross sind und den Radien des Spannbolzens (16; 33; 48, 49; 59, 60; 71, 72; 87) und der Spannfläche (17; 35; 61, 62; 89) entsprechen.

3. Kupplungsvorrichtung nach Anspruch 1 oder 2, **dadurch gekennzeichnet, dass** der Kippwinkel zwischen 1° und 20°, vorzugsweise zwischen 1° und 10° liegt.

4. Kupplungsvorrichtung nach einem der Ansprüche 1 bis 3, **dadurch gekennzeichnet, dass** eines der beiden Kupplungsteile (11, 12; 29, 36; 41, 46; 53, 56; 64, 69; 81, 84) gabelförmig ausgebildet sind, und das andere der beiden Kupplungsteile (11, 12; 29, 36; 41, 46; 53, 56; 64, 69; 81, 84) in die Gabel eingreift.

5. Kupplungsvorrichtung nach einem der Ansprüche 1 bis 4, **dadurch gekennzeichnet, dass** mehrere Spannbolzen (16; 33; 48, 49; 59, 60; 71, 72; 87) mit zugeordneten ersten und zweiten Bohrungen (13, 34, 83; 14; 38; 86) vorgesehen sind, und dass die Spannbolzen (16; 33; 48, 49; 59, 60; 71, 72; 87) mit ihren zugeordneten ersten und zweiten Bohrungen (13, 34, 83; 14; 38; 86) paarweise in einer gemeinsamen Achse angeordnet sind.

6. Kupplungsvorrichtung nach einem der Ansprüche 1 bis 5, **dadurch gekennzeichnet, dass** die beiden Kupplungsteile (81, 84) mit einer Mehrzahl von alternierend angeordneten Laschen (82, 85) ineinandergreifen, welche sich in der Spannrichtung (SR) erstrecken.

7. Kupplungsvorrichtung nach einem der Ansprüche 1 bis 6, **dadurch gekennzeichnet, dass** die Spannbolzen (16; 33; 48, 49; 59, 60; 71, 72; 87) hydraulisch betätigbar sind.

8. Kupplungsvorrichtung nach einem der Ansprüche 1 bis 7, **dadurch gekennzeichnet, dass** an einem der Kupplungsteile (11, 12; 29, 36; 41, 46; 53, 56; 64, 69; 81, 84) quer zur Spannrichtung (SR) stehende Bolzen (39, 47, 57, 66, 77) angeordnet sind, hinter welche das andere der Kupplungsteile (11, 12; 29, 36; 41, 46; 53, 56; 64, 69; 81, 84) beim Verbinden der Kupplungsteile (11, 12; 29, 36; 41, 46; 53, 56; 64, 69; 81, 84) mit entsprechenden Haken (32, 45, 55, 70, 79) greift.

9. Erdbewegungsmaschine (20), **dadurch gekennzeichnet, dass** sie mit einer Kupplungsvorrichtung (10, 28, 40, 52, 63, 80) nach einem der Ansprüche 1 bis 8 ausgerüstet ist.

10. Erdbewegungsmaschine nach Anspruch 9, **dadurch gekennzeichnet, dass** die Erdbewegungsmaschine (20) eine Schnellwechselvorrichtung (25) zum schnellen Wechseln von an der Erdbewegungsmaschine (20) anbringbaren Werkzeugen (27) aufweist, und dass die Kupplungsvorrichtung (28, 40, 52) Teil der Schnellwechselvorrichtung (25) ist.

11. Erdbewegungsmaschine nach Anspruch 9 oder 10, **dadurch gekennzeichnet, dass** die Erdbewegungsmaschine ein Bagger (20) mit einem Ausleger (21) ist, und dass die Kupplungsvorrichtung (63) an Verbindungsstellen (23, 24) des Auslegers (21) vorgesehen ist.

12. Erdbewegungsmaschine nach Anspruch 11, **dadurch gekennzeichnet, dass** mittels der Kupplungsvorrichtung (63) in den Verbindungsstellen (23, 24) eine Verlängerung (22) in den Ausleger (21) einsetzbar ist.

13. Erdbewegungsmaschine nach Anspruch 11, **dadurch gekennzeichnet, dass** mittels der Kupplungsvorrichtung (63) in den Verbindungsstellen (23, 24) ein Zwischenstück (74) zum Strecken des Auslegers (21) in den Ausleger (21) einsetzbar ist.

## Claims

1. Coupling mechanism (10, 28, 40, 52, 63, 80) for backlash-free, releasable connection of two coupling parts (11, 12; 29, 36; 41, 46; 53, 56; 64, 69; 81, 84) which are arranged, in particular, on machines and/or add-on parts of earth-moving machines and on the tools and/or add-on devices thereof, wherein, for coupling purposes, the two coupling parts (11, 12; 29, 36; 41, 46; 53, 56; 64, 69; 81, 84) are designed to inter-engage with mutual butting in a clamping direction (SR), and a first bore (13, 34, 83) which is concentric to a clamping axis (19) and which is intended for guiding a clamping bolt (16; 33; 48, 49; 59, 60; 71, 72; 87) is arranged in one of the two coupling parts (11, 12; 29, 36; 41, 46; 53, 56; 64, 69; 81, 84), and a second bore (14; 38; 86), the axis of which is tilted through a tilt angle with respect to the clamping axis (19), is arranged in the other of the two coupling parts (11, 12; 29, 36; 41, 46; 53, 56; 64, 69; 81, 84), said second bore forming, together with the first bore (13, 34, 83), in the coupled state a continuous opening for receiving the clamping bolt (16; 33; 48, 49; 59, 60; 71, 72; 87), **characterized in that** the clamping bolt (16; 33; 48, 49; 59, 60; 71, 72; 87) has a cylindrical shape adapted to the first bore (13, 34, 83) and is delimited, towards one end and on one side, by a clamping surface (17; 35; 61, 62; 89) in the form of a tilted cylinder shell segment which is adapted, in terms of radius and tilt angle, to the second bore (14; 38; 86).

2. Coupling mechanism according to Claim 1, **characterized in that** the clamping axis (19) is oriented substantially perpendicularly to the clamping direction (SR), and **in that** the radii of the first and second bores (13, 34, 83 and 14; 38; 86, respectively) are substantially the same size and correspond to the radii of the clamping bolt (16; 33; 48, 49; 59, 60; 71, 72; 87) and of the clamping surface (17; 35; 61, 62; 89).

3. Coupling mechanism according to Claim 1 or 2, **characterized in that** the tilt angle lies between 1° and 20°, preferably between 1° and 10°.

4. Coupling mechanism according to one of Claims 1 to 3, **characterized in that** one of the two coupling parts (11, 12; 29, 36; 41, 46; 53, 56; 64, 69; 81, 84) has a fork-shaped design, and the other of the two coupling parts (11, 12; 29, 36; 41, 46; 53, 56; 64, 69; 81, 84) engages in the fork.

5. Coupling mechanism according to one of Claims 1 to 4, **characterized in that** a plurality of clamping bolts (16; 33; 48, 49; 59, 60; 71, 72; 87) with associated first and second bores (13, 34, 83; 14; 38; 86) are provided, and **in that** the clamping bolts (16; 33; 48, 49; 59, 60; 71, 72; 87) with their associated first and second bores (13, 34, 83; 14; 38; 86) are arranged in pairs along a common axis.

6. Coupling mechanism according to one of Claims 1 to 5, **characterized in that** the two coupling parts (81, 84) inter-engage by way of a plurality of chain links (82, 85) which are arranged in alternating fashion and which extend in the clamping direction (SR).

7. Coupling mechanism according to one of Claims 1 to 6, **characterized in that** the clamping bolts (16; 33; 48, 49; 59, 60; 71, 72; 87) can be hydraulically actuated.

8. Coupling mechanism according to one of Claims 1 to 7, **characterized in that** bolts (39, 47, 57, 66, 77) situated transversely with respect to the clamping direction (SR) are arranged on one of the coupling parts (11, 12; 29, 36; 41, 46; 53, 56; 64, 69; 81, 84), behind which bolts the other of the coupling parts (11, 12; 29, 36; 41, 46; 53, 56; 64, 69; 81, 84) engages by way of corresponding hooks (32, 45, 55, 70, 79) when connecting the coupling parts (11, 12; 29, 36; 41, 46; 53, 56; 64, 69; 81, 84).

9. Earth-moving machine (20), **characterized in that** it is equipped with a coupling mechanism (10, 28, 40, 52, 63, 80) according to one of Claims 1 to 8.

10. Earth-moving machine according to Claim 9, **characterized in that** the earth-moving machine (20) comprises a quick-change mechanism (25) for quickly changing tools (27) which can be mounted on the earth-moving machine (20), and **in that** the coupling mechanism (28, 40, 52) is part of the quick-change mechanism (25).

11. Earth-moving machine according to Claim 9 or 10, **characterized in that** the earth-moving machine is an excavator (20) having a boom (21), and **in that** the coupling mechanism (63) is provided at connection points (23, 24) of the boom (21).

12. Earth-moving machine according to Claim 11, **characterized in that** an extension piece (22) can be inserted into the boom (21) in the connection points (23, 24) by means of the coupling mechanism (63).

13. Earth-moving machine according to Claim 11, **characterized in that** an intermediate piece (74) for elongating the boom (21) can be inserted into the boom (21) in the connection points (23, 24) by means of the coupling mechanism (63).

## Revendications

1. Dispositif d'accouplement (10, 28, 40, 52, 63, 80) pour la connexion sans jeu, amovible, de deux parties d'accouplement (11, 12 ; 29, 36 ; 41, 46 ; 53, 56 ; 64, 69 ; 81, 84), qui sont disposées notamment sur des machines et/ou des composants rapportés d'engins de terrassement ainsi que leurs outils et/ou appareils rapportés, les deux parties d'accouplement (11, 12 ; 29, 36 ; 41, 46 ; 53, 56 ; 64, 69 ; 81, 84) étant réalisées de manière à s'engager l'une dans l'autre en butée afin de réaliser l'accouplement dans une direction de serrage (SR), un premier alésage (13, 34, 83) concentrique à un axe de serrage (19), pour le guidage d'un boulon de serrage (16 ; 33 ; 48 ; 49 ; 59, 60 ; 71, 72 ; 87) étant disposé dans l'une des deux parties d'accouplement (1 1, 12 ; 29, 36 ; 41, 46 ; 53, 56 ; 64, 69 ; 81, 84), un deuxième alésage (14 ; 38 ; 86) étant disposé dans l'autre des deux parties d'accouplement (11, 12 ; 29, 36 ; 41, 46 ; 53, 56 ; 64, 69 ; 81, 84), dont l'axe est basculé suivant un angle de basculement par rapport à l'axe de serrage (19), et formant conjointement avec le premier alésage (13, 34, 83) dans l'état accouplé une ouverture traversante pour recevoir le boulon de serrage (16 ; 33 ; 48 ; 49 ; 59, 60 ; 71, 72 ; 87), **caractérisé en ce que** le boulon de serrage (16 ; 33 ; 48 ; 49 ; 59, 60 ; 71, 72 ; 87) présente une forme cylindrique adaptée au premier alésage (13, 34, 83) et est limité vers une extrémité au niveau d'un côté par une face de serrage (17 ; 35 ; 61, 62 ; 89) en forme de segment d'enveloppe cylindrique basculé, qui est adaptée en termes de rayon et d'angle de basculement au deuxième alésage (14 ; 38 ; 86).

2. Dispositif d'accouplement selon la revendication 1, **caractérisé en ce que** l'axe de serrage (19) est orienté essentiellement perpendiculairement à la direction de serrage (SR), et **en ce que** les rayons du premier et du deuxième alésage (13, 34, 83, respectivement 14 ; 38 ; 86) sont sensiblement identiques et correspondent aux rayons du boulon de serrage (16 ; 33 ; 48, 49 ; 59, 60 ; 71, 72 ; 87) et de la surface de serrage (17; 35 ; 61, 62 ; 89).

3. Dispositif d'accouplement selon la revendication 1 ou 2, **caractérisé en ce que** l'angle de basculement est compris entre 1° et 20°, de préférence entre 1° et 10°.

4. Dispositif d'accouplement selon l'une quelconque des revendications 1 à 3, **caractérisé en ce que** l'une des deux parties d'accouplement (11, 12 ; 29, 36 ; 41, 46 ; 53, 56 ; 64, 69 ; 81, 84) est réalisée en forme de fourche, et l'autre des deux parties d'accouplement (11, 12 ; 29, 36 ; 41, 46 ; 53, 56 ; 64, 69 ; 81, 84) vient en prise dans la fourche.

5. Dispositif d'accouplement selon l'une quelconque des revendications 1 à 4, **caractérisé en ce que** plusieurs boulons de serrage (16 ; 33 ; 48, 49 ; 59, 60 ; 71, 72 ; 87) avec des premiers et deuxièmes alésages associés (13, 34, 83 ; 14 ; 38 ; 86) sont prévus, et **en ce que** les boulons de serrage (16 ; 33 ; 48, 49 ; 59, 60 ; 71, 72 ; 87) sont disposés avec leurs premiers et deuxièmes alésages associés (13, 34, 83 ; 14 ; 38 ; 86) par paire dans un axe commun.

6. Dispositif d'accouplement selon l'une quelconque des revendications 1 à 5, **caractérisé en ce que** les deux parties d'accouplement (81, 84) viennent en prise l'une dans l'autre avec une pluralité de pattes (82, 85) disposées en alternance, lesquelles s'étendent dans la direction de serrage (SR).

7. Dispositif d'accouplement selon l'une quelconque des revendications 1 à 6, **caractérisé en ce que** les boulons de serrage (16 ; 33 ; 48, 49 ; 59, 60 ; 71, 72 ; 87) peuvent être commandés hydrauliquement.

8. Dispositif d'accouplement selon l'une quelconque des revendications 1 à 7, **caractérisé en ce que** des boulons (39, 47, 57, 66, 77) disposés transversalement à la direction de serrage (SR) sont disposés sur l'une des parties d'accouplement (11, 12 ; 29, 36 ; 41, 46 ; 53, 56 ; 64, 69 ; 81, 84), derrière lesquels boulons l'autre des parties d'accouplement (11, 12 ; 29, 36 ; 41, 46 ; 53, 56 ; 64, 69 ; 81, 84) s'engage lors de la connexion des parties d'accouplement (11, 12 ; 29, 36 ; 41, 46 ; 53, 56 ; 64, 69 ; 81, 84) avec des crochets correspondants (32, 45, 55, 70, 79).

9. Engin de terrassement (20), **caractérisé en ce qu'**il est équipé d'un dispositif d'accouplement (10, 28, 40, 52, 63, 80) selon l'une quelconque des revendications 1 à 8.

10. Engin de terrassement selon la revendication 9, **caractérisé en ce que** l'engin de terrassement (20) présente un dispositif de remplacement rapide (25) pour le remplacement rapide des outils (27) pouvant être montés sur l'engin de terrassement (20), et **en ce que** le dispositif d'accouplement (28, 40, 52) fait partie du dispositif de remplacement rapide (25).

11. Engin de terrassement selon la revendication 9 ou 10, **caractérisé en ce que** l'engin de terrassement est une excavatrice (20) avec un bras (21), et **en ce que** le dispositif d'accouplement (63) est prévu sur des points de connexion (23, 24) du bras (21).

12. Engin de terrassement selon la revendication 11, **caractérisé en ce qu'**un prolongement (22) peut être inséré dans le bras (21) au moyen du dispositif d'accouplement (63) au niveau des points de connexion (23, 24).

13. Engin de terrassement selon la revendication 11, **caractérisé en ce qu'**une pièce intermédiaire (74) pour étirer le bras (21) peut être insérée dans le bras (21) au moyen du dispositif d'accouplement (63) au niveau des points de connexion (23, 24).
